# EUROPEAN PATENT APPLICATION

(11) **EP 4 628 186 A1**
(43) Date of publication of application: **08.10.2025**
(21) Application number: 24173854.1
(22) Date of filing: 02.05.2024
(51) Int. Cl.: B01D 35/147, B01D 35/153, B01D 35/30, B01D 35/26

(54) **VALVE ARRANGEMENT FOR A FILTRATION SYSTEM**

(30) Priority: 02.04.2024 CN 202410396031
(71) Applicant: Cummins Filtration Inc., Nashville, TN 37214 (US)
(72) Inventor: Xia, Xiaohuan, Wuhan, 430100 (CN); Hu, Qin, Wuhan, 430051 (CN); Huang, Ruhui, Wuhan, 430056 (CN); Zhang, Yufan, Wuhan City (CN)
(74) Representative: Marks & Clerk LLP

(57) **Abstract**

The application relates to a valve arrangement for a filtration system. A valve assembly includes a valve body. The valve body includes a first central wall defining a first valve opening, a first fluid passageway, and a valve central opening, and a valve wall defining a second valve opening and a second fluid passageway. The valve assembly includes a first valve member disposed at the first valve opening. The first valve member is selectively repositionable between a first valve member first position, where the first valve member engages the first central wall such that the first valve member forms a first seal that substantially prevents a fluid from flowing through the one or more first fluid passageways, and a first valve member second position, where the first valve member disengages the first central wall such that the fluid is permitted to flow through the one or more first fluid passageways.

## Description

### CROSS-REFERENCE TO RELATED APPLICATIONS

The present application claims priority to Chinese Patent Application No. 2024103960317, filed April 2, 2024 and the contents of which are incorporated herein by reference.

### TECHNICAL FIELD

The present application relates generally to a valve arrangements for use in filtration systems.

### BACKGROUND OF THE RELATED ART

Filtration systems may be used to separate contaminates from a fluid to protect downstream devices from damage (e.g., corrosion, clogging, etc.). For example, filtration systems may protect downstream devices by including filter element to separate contaminants form the fluid that may damage the downstream devices. Filtration systems may be primed to reduce an amount of air entrained in the filtration system.

### CONTENT OF THE INVENTION

Various embodiments provide for a valve assembly. The valve assembly includes a valve body. The valve body includes a first central wall defining a first valve opening, one or more first fluid passageways, and a valve central opening. The valve body includes a valve wall defining a second valve opening and one or more second fluid passageways, the valve wall spaced away from the first central wall by the central opening. The valve body defines a first chamber and a second chamber. The first chamber is separated from the second chamber by at least the first central wall. The valve assembly includes a first valve member disposed at the first valve opening. The first valve member is selectively repositionable between a first valve member first position, where the first valve member engages the first central wall such that the first valve member forms a first seal that substantially prevents a fluid from flowing through the one or more first fluid passageways, and a first valve member second position, where the first valve member disengages the first central wall such that the fluid is permitted to flow through the one or more first fluid passageways. The valve assembly includes a second valve member disposed at the second valve opening.

In some embodiments, the one or more first fluid passageways are spaced away from the valve central opening.

In some embodiments, the one or more first fluid passageways are disposed proximate the first valve opening.

In some embodiments, the first valve member comprises a valve head, the first valve member positioned at least partially within the first valve opening such that, when a second fluid pressure in the second chamber is less than a first fluid pressure in the first chamber, the first valve member is forced away from the first central wall, such that the first valve member disengages the first central wall.

In some embodiments, the second valve member is selectively repositionable between a second valve member first position, where the second valve member engages the valve wall such that the second valve member forms a second seal that substantially prevents a fluid from flowing through the one or more second fluid passageways, and a second valve member second position, where the second valve member disengages the valve wall such that the fluid is permitted to flow through the one or more second fluid passageways.

In some embodiments, the valve assembly defines a valve axis and the valve assembly further comprises: a first side wall extending circumferentially around the valve axis, the first central wall extending inward from the first side wall; a first end wall extends radially outward from the first side wall away from the valve axis, a first portion of the first side wall extending away from the first end wall in a first axial direction, and a second portion of the first side wall extending away from the first end wall in a second axial direction, opposite the first axial direction; a second side wall extending away from the first central wall; a second central wall extending away from the first central wall at the valve central opening; and second end wall extending away from the second side wall away from the valve axis.

In some embodiments, the first central wall, the second central wall, the second side wall, and the second end wall cooperate to define the first chamber.

In some embodiments, the first side wall, the first central wall, the second central wall, the second end wall, and the valve wall cooperate to define the second chamber.

In some embodiments, the second chamber is in fluid receiving communication with the first chamber via the one or more first fluid passageways.

Various other embodiments provide for a filtration system. The filtration system includes a filter head defining an outlet port and a central port. The central port extends through the outlet port. The filtration system includes a filter cartridge removably coupled to the filter head. The filtration system includes a hand pump coupled to the filter head. The filtration system includes a valve assembly disposed in the central port. The valve assembly includes a valve body. The valve body includes a first central wall defining first valve opening, one or more first fluid passageways, and a valve central opening. The valve body includes a valve wall defining a second valve opening and one or more second fluid passageways. The valve wall is spaced away from the first central wall by the central opening. The valve body defines a first chamber and a second chamber. The first chamber is separated from the second chamber by at least the first central wall. The second chamber is in fluid communication with the outlet port. The valve assembly includes a first valve member disposed at the first valve opening. The first valve member is selectively repositionable between a first valve member first position, where the first valve member engages the first central wall such that the first valve member forms a first seal that substantially prevents a fluid from flowing through the one or more first fluid passageways, and a first valve member second position, where the first valve member disengages the first central wall such that the fluid is permitted to flow through the one or more first fluid passageways. The valve assembly includes a second valve member disposed at the second valve opening.

In some embodiments, the first chamber is in fluid communication with the filter cartridge and the second chamber is in fluid communication with the hand pump.

In some embodiments, the hand pump is configured to selectively decrease a second fluid pressure in the second chamber relative to a first fluid pressure in the first chamber; and selectively increase the second fluid pressure in the second chamber relative to a third fluid pressure in the outlet port.

In some embodiments, the first valve member is configured to move from the first valve member first position to the first valve member second position when the second fluid pressure in the second chamber is less than the first fluid pressure in the first chamber.

In some embodiments, the second valve member is selectively repositionable between a second valve member first position, where the second valve member engages the valve wall such that the second valve member forms a second seal that substantially prevents a fluid from flowing through the one or more second fluid passageways, and a second valve member second position, where the second valve member disengages the valve wall such that the fluid is permitted to flow through the one or more second fluid passageways; and the second valve member is configured to move from the second valve member first position to the second valve member second position when the second fluid pressure in the second chamber is greater than the third fluid pressure in the outlet port.

In some embodiments, the valve assembly defines a valve axis and the valve assembly further comprises: a first side wall extending circumferentially around the valve axis, the first central wall extending inward from the first side wall; a first end wall extends radially outward from the first side wall away from the valve axis, a first portion of the first side wall extending away from the first end wall in a first axial direction, and a second portion of the first side wall extending away from the first end wall in a second axial direction, opposite the first axial direction; a second side wall extending away from the first central wall; A second central wall extending away from the first central wall at the valve central opening; and second end wall extending away from the second side wall away from the valve axis.

In some embodiments, the filtration system further comprises a first channel wall extending away from the first end wall, substantially parallel to and spaced away from the first side wall, wherein the first side wall, the first end wall, and the first channel wall cooperate to define a first channel; and a first sealing member, the first channel is sized to receive the first sealing member, the first sealing member configured to contact and engage the hand pump, such that the first sealing member forms a seal between the valve assembly and the hand pump.

In some embodiments, the filtration system further comprises a second channel first wall extending away from the second end wall, towards the filter cartridge; a second channel second wall extending away from the second channel first wall and away from the valve axis, the second channel second wall spaced away from the second end wall, wherein the second end wall, the second channel first wall, and the second channel second wall cooperate to define a second channel; and a second sealing member, the second channel sized to receive the second sealing member, the second sealing member configured to contact and engage the filter head, such that the second sealing member forms a seal between the valve assembly and the filter head.

Various other embodiments provide for filter head for a filtration system. The filter head includes a filter head body defining an outlet port and a central port. The central port extends through the outlet port. The filter head includes a valve assembly disposed in the central port. The valve assembly includes a valve body. The valve body includes a first central wall defining first valve opening, one or more first fluid passageways, a valve central opening. The valve body includes a valve wall defining a second valve opening and one or more second fluid passageways. The valve wall is spaced away from the first central wall by the central opening. The valve body defines a first chamber and a second chamber. The first chamber is separated from the second chamber by at least the first central wall, and the second chamber is in fluid communication with the outlet port. The valve assembly includes a first valve member disposed at the first valve opening. The first valve member is selectively repositionable between a first valve member first position, where the first valve member engages the first central wall such that the first valve member forms a first seal that substantially prevents a fluid from flowing through the one or more first fluid passageways, and a first valve member second position, where the first valve member disengages the first central wall such that the fluid is permitted to flow through the one or more first fluid passageways. The valve assembly includes a second valve member disposed at the second valve opening.

In some embodiments, the filter head further comprises a hand pump, wherein the hand pump and the valve assembly are removably coupled to the filter head body.

In some embodiments, the valve assembly defines a valve axis and the valve assembly further comprises: a first side wall extending circumferentially around the valve axis, the first central wall extending inward from the first side wall; a first end wall extends radially outward from the first side wall away from the valve axis, a first portion of the first side wall extending away from the first end wall in a first axial direction, and a second portion of the first side wall extending away from the first end wall in a second axial direction, opposite the first axial direction; a second side wall extending away from the first central wall; a second central wall extending away from the first central wall at the valve central opening; and second end wall extending away from the second side wall away from the valve axis; wherein the first central wall, the second central wall, the second side wall, and the second end wall cooperate to define the first chamber; wherein the first side wall, the first central wall, the second central wall, the second end wall, and the valve wall cooperate to define the second chamber; and wherein the second chamber is in fluid receiving communication with the first chamber via the one or more first fluid passageways.

These and other features, together with the organization and manner of operation thereof, will become apparent from the following detailed description when taken in conjunction with the accompanying drawings, wherein like elements have like numerals throughout the several drawings described below.

### DESCRIPTION OF THE DRAWINGS

The foregoing and other features of the present disclosure will become more fully apparent from the following description and appended claims, taken in conjunction with the accompanying drawings. Understanding that these drawings depict only several implementations in accordance with the disclosure and are, therefore, not to be considered limiting of its scope, the disclosure will be described with additional specificity and detail through use of the accompanying drawings.
FIG. 1 is a cross-sectional view showing a portion of a filtration system, according to an example embodiment.
FIG. 2 is a perspective view of a filter head usable with the filtration system of FIG. 1, shown in a disassembled state.
FIG. 3 is a perspective view of the filtration system of FIG. 1, shown in a disassembled state.
FIG. 4 is a cross-sectional view of the filtration system of FIG. 1, shown with a pump installed in the filtration system.
FIG. 5 is a perspective view of a valve assembly usable in the filtration system of FIG. 1.
FIG. 6 is a perspective view of the valve assembly of FIG. 5, shown in a disassembled state.
FIG. 7 is a side view of the valve assembly of FIG. 5.
FIG. 8 is a cross-sectional side view of the valve assembly of FIG. 5.
FIG. 9 is another side view of the valve assembly of FIG. 5.
FIG. 10 is another cross-sectional side view of the valve assembly of FIG. 5.
FIG. 11 is top view of the valve assembly of FIG. 5.
FIG. 12 is bottom view of the valve assembly of FIG. 5.

Reference is made to the accompanying drawings throughout the following detailed description. In the drawings, similar symbols typically identify similar components unless context dictates otherwise. The illustrative implementations described in the detailed description, drawings, and claims are not meant to be limiting. Other implementations may be utilized, and other changes may be made, without departing from the spirit or scope of the subject matter presented here. It will be readily understood that the aspects of the present disclosure, as generally described herein, and illustrated in the figures, can be arranged, substituted, combined, and designed in a wide variety of different configurations, all of which are explicitly contemplated and made part of this disclosure.

### DETAILED DESCRIPTION OF EMBODIMENT

Referring to the Figures generally, various embodiments disclosed herein relate to a check valve for a filtration system. The check valve advantageously can be used in a filter head when a pump, such as a hand pump, is used. For example, a hand pump may be used to remove air from the filtration system, during priming. The hand pump may further be used to draw a fluid, such a fuel, through the filtration system, during priming.

The embodiments shown and described in further detail herein relate to an outside-in flow design for a filtration system. It should be understood that the embodiments described herein may be utilized in other filtration system arrangements. For example, the embodiments described herein may be utilized in an inside-out flow design and/or any other type of filtration systems. Additionally, the filtration system may include more or fewer components than as shown in the Figures. Accordingly, references to various components being within, downstream, exterior, upstream, and the like are relative to the embodiments shown in Figures, and it should be understood that other embodiments, such as an inside-out flow design for a filtration system, may have the same or similar components provided in a different arrangement.

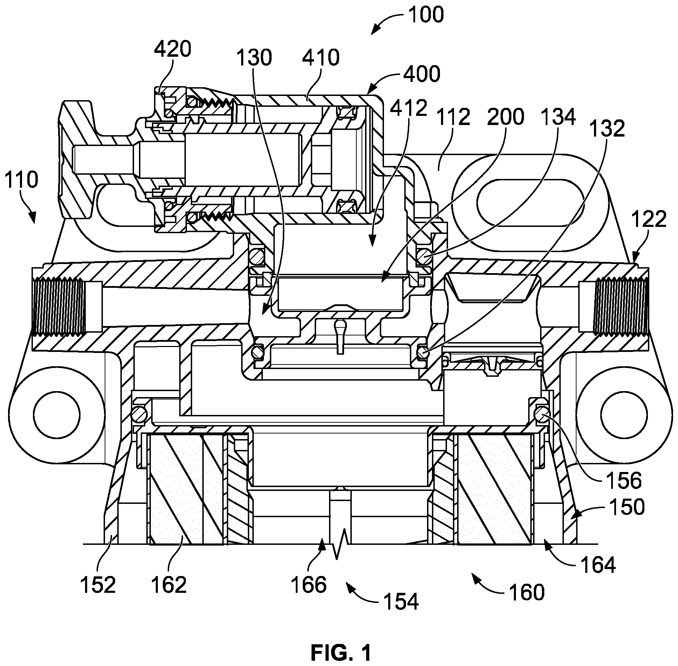

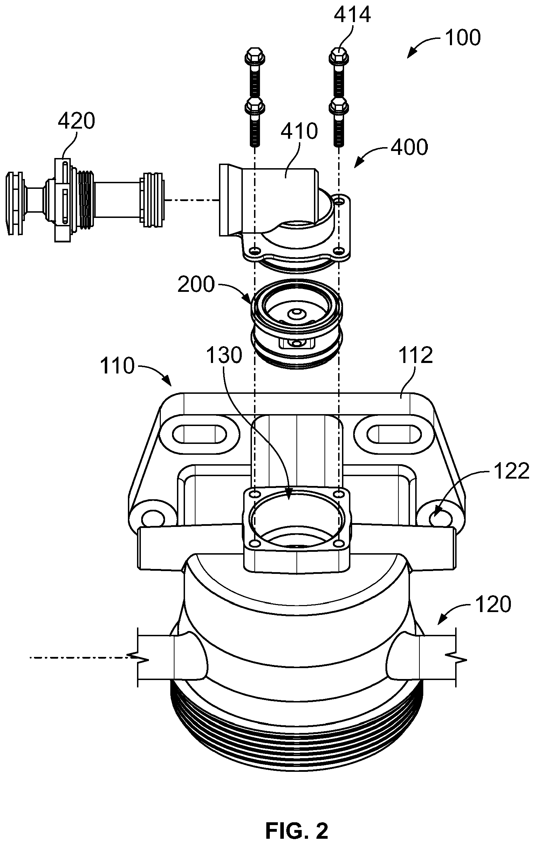

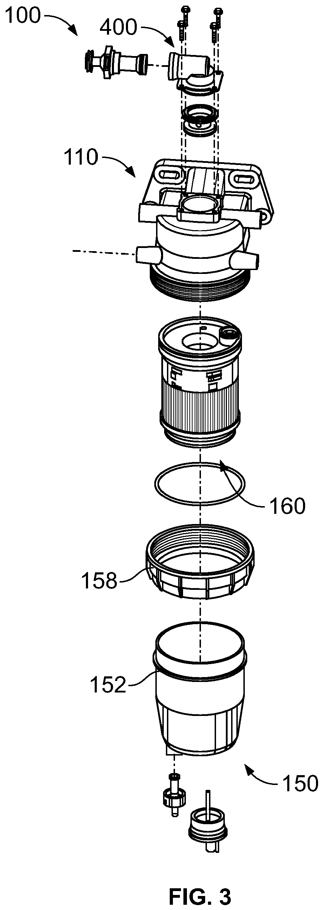

Now referring to FIGS. 1-4, various views of a filtration system 100 are shown, according to an example embodiment. The filtration system 100 is configured to receive an unfiltered fluid (e.g., fuel, oil, etc.), filter the fluid, and provide the filtered fluid to a downstream device, such as an engine. As shown, the filtration system 100 includes a filter head 110 and a filter cartridge 150. The filter cartridge 150 is configured to be coupled to the filter head 110. It should be understood that the filtration system 100 may include more or fewer components than as shown in FIGS. 1-4.

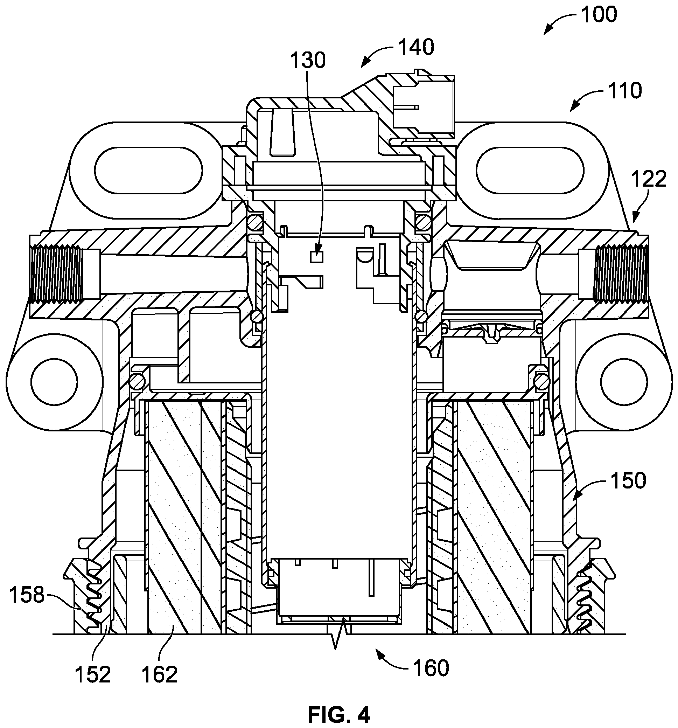

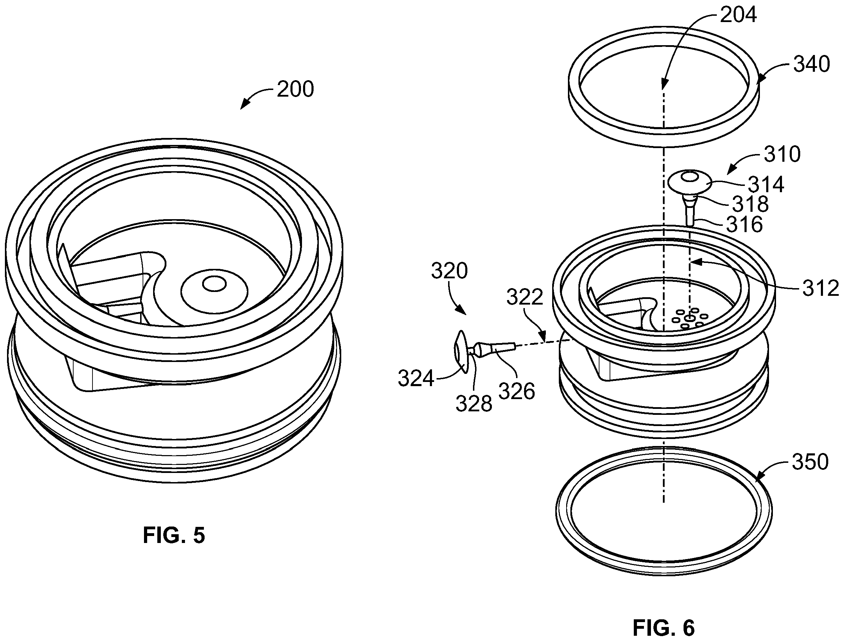

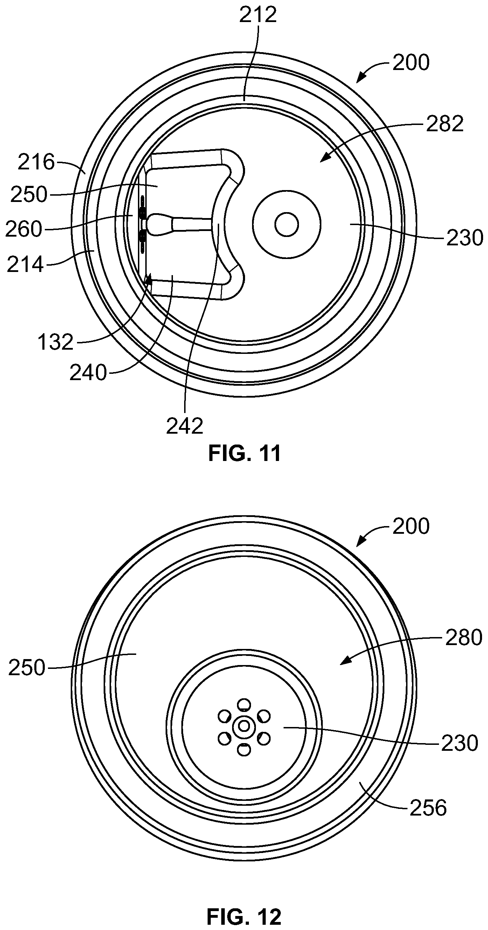

During operation of the filtration system 100, and as shown in FIG. 4, an electric pump 140 may be coupled to the filter head 110. For example, the electric pump 140 may be configured to pump a fluid, such as fuel, through the filtration system 100. In some embodiments, and as shown in FIGS. 1-3, a pump, shown as hand pump 400, may be coupled to the filter head 110. The hand pump 400 may be used to facilitate priming the filtration system 100. For example, the hand pump 400 may be used to remove air from the filtration system 100, during priming. The hand pump 400 may further be used to draw a fluid, such a fuel, through the filtration system 400, during priming. In these embodiments, a valve assembly 200 may be positioned in the filter head 110. The valve assembly 200 is removably coupled to the filter head body 112. The valve assembly 200 may allow a fluid to flow in a desired direction and/or to substantially prevent a fluid from flowing opposite the desired direction. The valve assembly 200 is shown and described in greater detail herein with respect to FIGS. 5-12.

The filter head 110 includes a filter head body 112. The filter head body 112 defines a first port 120 and a second port 122. The first port 120 is an inlet port in fluid receiving communication with an upstream device and in fluid providing communication with an interior of the filtration system 100. The second port 122 is an outlet port in fluid receiving communication with an interior of the filtration system 100 and in fluid providing communication with a downstream device, such as an engine. In some embodiments, the first port 120 may be an outlet port and the second port 122 may be an inlet port.

The filter head body 112 defines a central port 130. The central port 130 extends through the filter head body 112. The central port 130 is centered on a center axis of the filtration system 100. The center axis extends through a radial center of the filtration system 100, a center of the filter head 110, and/or a center of the filter cartridge 150.

In some embodiments, such as during operation, the filtration system 100 includes the pump 140, as shown in FIG. 4. The pump 140 is at least partially disposed within the central port 130. That is, the central port 130 is sided to receive the at least a portion of the pump 140 therein. The pump 140 is configured to create a pressure differential within the filtration system 100 thereby drawing fluid in an outside-in flow configuration.

In some embodiments, the pump 140 is interchangeable with (e.g., can be replaced with) the hand pump 400. In some embodiments, when the pump 140 is replaced with the hand pump 400, the valve assembly 200 is provided in the central port 130. The hand pump 400 is removably coupled to the filter head body 112.

In some embodiments, such as during a priming operation, the filtration system 100 includes the hand pump 400, as shown in FIGS. 1-3. The hand pump 400 is at least partially disposed within the central port 130. That is, the central port 130 is sided to receive the at least a portion of the hand pump 400 therein. The hand pump 400 is configured to create a pressure differential within the filtration system 100 thereby drawing fluid in an outside-in flow configuration.

The hand pump 400 includes a pump body 410. The pump body 410 defines a chamber 412 that is configured to receive a fluid therein. The hand pump 400 is in fluid receiving communication with the valve assembly 200. The hand pump 400 receives the fluid at the chamber 412. The pump body 410 may be coupled to the filter head 110 by one or more fasteners 414.

The hand pump 400 includes a plunger portion 420. The plunger portion 420 is coupled to the pump body 410. The plunger portion 420 facilitates drawing a fluid into the pump body 410. For example, a user may manipulate the plunger portion 420 to cause the hand pump to draw a fluid into hand pump 400 (e.g., at the chamber 412).

The filter cartridge 150 includes a shell 152 and a filter element 160. The shell 152 at least partially defines an internal volume 154. The filter head 110 at least partially defines the internal volume 154. The filter element 160 is disposed at least partially within the internal volume 154 such that the filter element 160 is within the filter head 110 and the shell 152.

The filter cartridge 150 may include one or more sealing member 156 (e.g., an O-ring, a gasket, etc.). The at least one sealing member 156 is disposed between the shell 152 and the filter head 110. The at least one sealing member 156 engages the filter head 110 and the shell 152 and forms a first, radially directed seal therebetween. The at least one sealing member 156 substantially prevents a fluid from flowing between the filter head 110 and the shell 152.

The filtration system 100 includes a collar 158. The collar 158 couples the filter cartridge 150 to the filter head 110.

The filter element 160 is configured to filter the fluid (e.g., by removing contaminants). In some embodiments, the filter element 160 is removably coupled to the shell 152. In other embodiments, the filter element 160 is permanently secured within the shell 152 such that the filter element 160 cannot be removed from the shell 152 without causing damage to the filter element 160 and/or the shell 152. The filter element 160 is at least partially contained within the shell 152 and/or the filter head 110.

As shown, the filter element 160 includes a filter media 162. The filter media 162 may positioned between and may be coupled to one or more endplates. The filter media 162 is formed in a cylindrical or annular configuration. The filter media 162 may be pleated to increase surface area. The filter media 162 may be a single-layer media or a multi-layer media made from at least one of a woven fiber, a non-woven material, a wet laid material, a polymeric material, a glass material, a cellulose material, and/or other suitable material. The filter media 162 is structured to allow the unfiltered fluid to be filtered by flowing through the filter media 162. For example, the unfiltered fluid flows through the filter media 162, and the filter media 162 removes impurities, such as particulates, organic matter, and the like, from the unfiltered fluid as the unfiltered fluid passes through the filter media 162. The impurities are trapped by the filter media 162. An outer volume 164 is defined between the filter media 162 and the shell 152. An internal volume 166 is defined within the filter media 162. In operation, a fluid flows from the outer volume 164, through the filter element 162, and into the inner volume 166.

The filtration system 100 includes the valve assembly 200. The valve assembly 200 is disposed in the central port 130. The valve assembly 200 is in fluid communication with the inner volume 166, the second port 122, and the hand pump 400. In an example embodiment, the valve assembly 200 allows a fluid to flow from the inner volume 166, through the valve assembly 200, and into a chamber defined by the hand pump 400. The valve assembly 200 also allows a fluid to flow from the chamber defined by the hand pump 400, through the valve assembly 200, and into the second port 122.

In an example embodiment, the valve assembly 200 defines a valve axis 204. One or more of the components of the valve assembly 200 may be centered on the valve axis 204. The valve assembly 200 can be centered on the valve axis 204. For example, the valve axis 204 extends through a center point of the valve assembly 200.

As used herein, the term "axis" describes a theoretical line extending through at least a portion of an object, such as a centroid (e.g., center of mass, geometric center, etc.) of an object. In some arrangements, the object is centered on the axis. The object is not necessarily cylindrical (e.g., a non-cylindrical shape may be centered on an axis, etc.). Furthermore, the object is not necessarily on the axis (e.g., a centroid of a hollow object may be on the axis, but no portion of the object needs to be on the axis).

The relative positioning of the components of the valve assembly 200 described herein may be described relative to the valve axis 204. For example, an axial direction is along or substantially parallel to the valve axis 204. A radial direction may be defined as a direction that is substantially perpendicular to the axial direction. A radial outward direction may be substantially away from the valve axis 204. A radial inward direction may be substantially towards the valve axis 204. A circumferential direction may be defined as a direction along a theoretical circle centered on the valve axis 204. A tangential direction may be defined as a direction along a theoretical tangent line of the theoretical circle centered on the valve axis 204.

The valve assembly 200 includes a valve body 202. In some embodiments, the valve assembly 200 includes a first valve member 310 and a second valve member 320. In some embodiments, the valve assembly 200 includes a first sealing member 340 and a second sealing member 350.

During operation, a user may operate the hand pump 400 to pump a fluid (e.g., air, fuel, oil, etc.) from the internal volume 166, through the valve assembly 200, and to the hand pump 400. The first valve member 310 of the valve assembly 200 may allow the fluid to flow from the internal volume 166 to the hand pump 400. The first valve member 310 of the valve assembly 200 may substantially prevent the fluid from flowing in the opposite direction (e.g., from the hand pump 400 to the internal volume 166).

During operation, a user may operate the hand pump 400 to pump the fluid from the hand pump 400, through the valve assembly 200, and to second port 122. The second valve member 320 of the valve assembly 200 may allow the fluid to flow from the hand pump 400 to the second port 122. The second valve member 320 of the valve assembly 200 may substantially prevent the fluid from flowing in the opposite direction (e.g., from the second port 122 to the hand pump 400). Advantageously, the valve assembly 200 operates as a two-valve check valve, where each valve allows flow in a single direction.

The first valve member 310 includes a valve head 314, a valve shaft 316, and a valve neck 318. The valve head 314 is configured to selectively seal against a portion of the valve body 202 to prevent a fluid from flowing through the portion of the valve body 202. The valve shaft 316 extends away from the valve head 314. The valve neck 318 connects the valve shaft 316 to the valve head 314. A diameter of the valve neck 318 is less than a diameter of the valve shaft 316 and smaller than a diameter of the valve head 314.

The second valve member 320 includes a valve head 324, a valve shaft 326, and a valve neck 328. The valve head 324 is configured to selectively seal against a portion of the valve body 202 to prevent a fluid from flowing through the portion of the valve body 202. The valve shaft 326 extends away from the valve head 324. The valve neck 328 connects the valve shaft 326 to the valve head 324. A diameter of the valve neck 328 is less than a diameter of the valve shaft 326 and smaller than a diameter of the valve head 324.

The valve body 202 includes a first side wall 212. The first side wall 212 extends circumferentially around the valve axis 204. The first side wall 212 extends circumferentially around the valve axis 204 at a first radius 206. The first side wall 212 has a substantially circular cross section.

The first side wall 212 defines a first opening 213. The first opening 213 is disposed at the hand pump 400, such that a fluid can flow from the valve assembly 200 to the hand pump 400 and/or from the hand pump 400 to the valve assembly 200 via the first opening 213.

The valve body 202 includes a first end wall 214. The first end wall 214 extends away from the first side wall 212. The first end wall 214 extends radially outward from the first side wall 212. A first portion of the first side wall 212 extends away from the first end wall 214, towards the hand pump 400. The first portion of the first side wall 212 extends in a first axial direction. A second portion of the first side wall 212 extends away from the first end wall 214 towards the filter cartridge 150. The second portion of the first side wall 212 extends in a second axial direction, opposite the first direction. In some embodiments, the first end wall 214 is contiguous with the first side wall 212.

The valve body 202 includes a first channel wall 216. The first channel wall 216 extends away from the first end wall 214. The first channel wall 216 extends towards the hand pump 400. The first channel wall 216 extends in an axial direction, substantially parallel to the first side wall 212. The first channel wall 216 is spaced away from the first side wall 212. For example, the first channel wall 216 may be spaced away from the first side wall 212 in the radial direction. In some embodiments, the first channel wall 216 is contiguous with the fist end wall 214.

The first side wall 212, the first end wall 214, and the first channel wall 216 cooperate to define a first channel 218. The first channel 218 is sized to receive the first sealing member 340. The first sealing member 340 is configured to contact and engage the hand pump 400, such that the first sealing member 340 forms a seal between the valve assembly 200 and the hand pump 400.

The valve body 202 includes a first central wall 230. The first central wall 230 extends inward from the first side wall 212. The first central wall 230 extends in a radial direction, away from the first side wall 212, towards the valve axis 204. The first central wall 230 defines a central opening 232. The central opening 232 is sized to receive at least a portion of the second valve member 320 therein. In some embodiments, the first central wall 230 is contiguous with the first side wall 212.

The first central wall 230 defines a first valve opening 234. The first valve opening 234 extends axially through the first central wall 230. The first valve opening 234 is sized to receive at least a portion of the first valve member 310. The first valve opening 234 is sized to receive the valve neck 318 therein. The first valve opening 234 is sized to prevent the valve head 314 and the valve shaft 316 from entering the first valve opening 234. In this way, the valve member 310 can translate relative to the first central wall 230 along the length of the valve neck 318.

The first central wall 230 defines one or more fluid passageways 236. The one or more fluid passageways 236 extend axially through the first central wall 230. The one or more fluid passageways 236 are disposed proximate the first valve opening 234. In an example embodiment, the one or more fluid passageways 236 are disposed circumferentially around the first valve opening 234 at a predetermined radius. The one or more fluid passageways 236 enable fluid communication through the first central wall 230. More specifically, the one or more fluid passageways 236 enable fluid communication between the inner volume 166 and the hand pump 400. The one or more fluid passageways 236 are spaced away from the central opening 232. For example, the one or more fluid passageways 236 may be spaced away from the central opening 232 in the radial direction.

The first central wall 230 defines a first valve sealing surface 238. The first valve member 310 is configured to selectively engage the first valve sealing surface 238. More specifically, the valve head 314 is configured to selectively engage the first valve sealing surface 238. When the first valve member 310 engages the first valve sealing surface 238, the first valve member 310 forms a seal that substantially prevents a fluid from flowing through the one or more fluid passageways 236. When the first valve member 310 disengages the first valve sealing surface 238, the fluid can flow through the one or more fluid passageways 236.

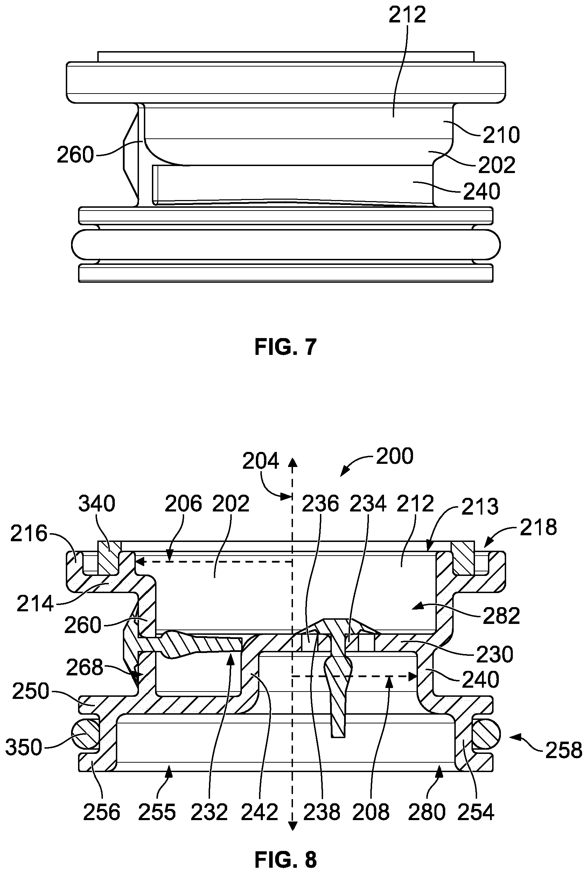

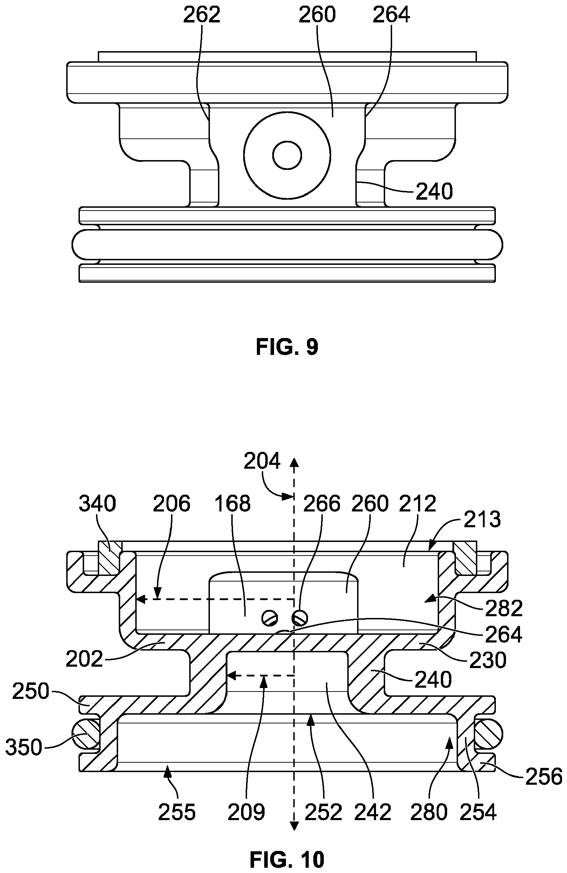

The valve body 202 includes a second side wall 240. The second side wall 240 extends away from the first central wall 230. The second side wall 240 extends in an axial direction. The second side wall 240 extends towards the filter cartridge 150 and away from the hand pump 400. The second side wall 240 is substantially parallel to the first side wall 212. The second side wall 240 has a substantially irregular shape. For example, a first distance 208 (shown in FIG. 8) between the valve axis 204 and a first portion of the second side wall 240 is greater than a second distance 209 (shown in FIG. 10) between the valve axis 204 and a second portion of the second side wall 240. In some embodiments, the second side wall 240 is contiguous with the first central wall 230.

The valve body 202 includes a second central wall 242. The second central wall 242 extends away from the first central wall 230 at the opening 232. The second central wall 242 extends in an axial direction. The second central wall 242 extends away from the first end wall 214. The second central wall 242 is substantially parallel to the first side wall 212. The second central wall 242 is substantially parallel to the second side wall 240. In some embodiments, the second central wall 242 intersects and is contiguous with the second side wall 240. In some embodiments, the second central wall 242 is contiguous with the first central wall 230.

The valve body 202 includes a second end wall 250. The second end wall 250 extends away from the second side wall 240. The second end wall 250 extends in a radial direction. A first portion of the second end wall 250 extends outward from the second side wall 240, away from the valve axis 204. The first portion of the second end wall 250 extends in a first radial direction. A second portion of the second end wall 250 extends away from the second side wall 240, inward from the second side wall 240, towards the valve axis 204. The second portion of the second end wall 250 extends in a second radial direction, opposite the first direction. In some embodiments, the second end wall 250 is contiguous with the second side wall 240. In some embodiments, the second end wall 250 is contiguous with the second central wall 242.

The valve body 202 includes a second channel first wall 254. The second channel first wall 254 extends away from the second end wall 250. The second channel first wall 254 extends towards the filter cartridge 150. The second channel first wall 254 extends in an axial direction, substantially parallel to the second side wall 240. In some embodiments, the second channel first wall 254 is contiguous with the second end wall 250.

In some embodiments, the second channel first wall 254 defines a second opening 255. The second opening 255is disposed at the filter cartridge 150, such that a fluid can flow from the valve assembly 200 to the filter cartridge 150 and/or from the filter cartridge 150 to the valve assembly 200 via the first opening 213.

The valve body 202 includes a second channel second wall 256. The second channel second wall 256 extends away from the second channel first wall 254. The second channel second wall 256 extends away from the valve axis 204. The second channel second wall 256 extends in a radial direction. The second channel second wall 256 is spaced away from the second end wall 250. For example, the second channel second wall 256 may spaced away from the second end wall 250 in the axial direction. In some embodiments, the second channel second wall 256 is contiguous with the second channel first wall 254.

The second end wall 250, the second channel first wall 254, and the second channel second wall 256 cooperate to define a second channel 258. The second channel 258is sized to receive the second sealing member 350. The second sealing member 350 is configured to contact and engage the filter head 110, such that the second sealing member 350 forms a seal between the valve assembly 200 and the filter head 110.

The valve body 202 includes a valve wall 260. The valve wall 260 extends from the first end wall 214 to the second end wall 250. The valve wall 260 cooperates with the first central wall 230 to define the opening 232. In this way, the valve wall 260 extends from the first end wall 214, past the first central wall 230, and to the second end wall 250. The valve wall 260 extends in an axial direction. The valve wall 260 is substantially parallel to the first side wall 212 and the second side wall 240. In some embodiments, the valve wall 260 intersects and is contiguous with the first side wall 212 and the second side wall 240. In some embodiments, the valve wall 260 is contiguous with the first end wall 214 and the second end wall 250. The valve wall 260 is separated from the first central wall 230 by the central opening 232.

The valve wall 260 defines a second valve opening 264. The second valve opening 264 extends radially through the valve wall 260. The second valve opening 264 is sized to receive at least a portion of the second valve member 320. The second valve opening 264 is sized to receive the valve neck 328 therein. The second valve opening 264 is sized to prevent the valve head 324 and the valve shaft 326 from entering the second valve opening 264. In this way, the valve member 320 can translate relative to the valve wall 260 along the length of the valve neck 328.

The valve wall 260 defines one or more fluid passageways 266. The one or more fluid passageways 266 extend axially through the valve wall 260. The one or more fluid passageways 266 are disposed proximate the second valve opening 264. In an example embodiment, the one or more fluid passageways 266 are disposed circumferentially around the first valve opening 264 at a predetermined radius. The one or more fluid passageways 266 enable fluid communication through the valve wall 260. More specifically, the one or more fluid passageways 266 enable fluid communication between the hand pump 400 and the second port 122.

The valve wall 260 defines a second valve sealing surface 268. The second valve member 320 is configured to selectively engage the second valve sealing surface 268. More specifically, the valve head 324 is configured to selectively engage the second valve sealing surface 268. When the second valve member 320 engages the second valve sealing surface 268, the second valve member 320 forms a seal that substantially prevents a fluid from flowing through the one or more fluid passageways 266. When the second valve member 320 disengages the second valve sealing surface 268, the fluid can flow through the one or more fluid passageways 266.

The valve body 202 defines a first chamber 280. The first central wall 230, the second central wall 242, the second side wall 240, and the second end wall 250 cooperate to define the first chamber 280 of the valve assembly 200. The first chamber 280 of the valve assembly 200 is in fluid receiving communication with the filter cartridge 150. The first chamber 280 of the valve assembly 200 is in fluid receiving communication with the inner volume 166 of the filter cartridge 150.

The valve body 202 defines a second chamber 282. The first side wall 212, the first central wall 230, the second central wall 242, the second end wall 250, and the valve wall 260 cooperate to define the second chamber 282 of the valve assembly 200. The second chamber 282 of the valve assembly 200 is in fluid receiving communication with the first chamber 280. The first chamber 280 of the valve assembly 200 is in fluid providing communication with the second chamber 282. The second chamber 282 of the valve assembly 200 is in fluid providing communication with the second port 122.

The first central wall 230 at least partially separates the first chamber 280 and the second chamber 282. The second central wall 242 at least partially separates the first chamber 280 and the second chamber 282. The second end wall 250 at least partially separates the first chamber 280 and the second chamber 282. The first chamber 280 of the valve assembly 200 is in fluid providing communication with the second chamber 282 via the one or more fluid passageways 236. The second chamber 282 of the valve assembly 200 is in fluid receiving communication with the first chamber 280 via the one or more fluid passageways 236.

The first valve member 310 is selectively repositionable between a first valve member first position and a first valve member second position. In the first position, the first valve member 310 engages the first central wall 230 such that the first valve member 310 forms a first seal that substantially prevents a fluid from flowing through the one or more first fluid passageways 236. In the second position, the first valve member 310 disengages the first central wall 230 such that the fluid is permitted to flow through the one or more first fluid passageways 236.

In an example embodiment, the first valve member 310 is positioned at least partially within the first valve opening 234 such that the valve head 314 is positioned towards the hand pump 400. When a fluid pressure (e.g., gas pressure, liquid pressure, etc.) in the second chamber 282 is less than a fluid pressure in the first chamber 280, the first valve member 310 is forced away from the valve sealing surface 238 (e.g., towards the hand pump 400) by the fluid pressure in the first chamber 280, such that the first valve member 310 disengages the first valve sealing surface 238. When the first valve member 310 disengages the first valve sealing surface 238, a fluid flows from the higher pressure first chamber 280 to the lower pressure second chamber 282.

In some embodiments, the fluid pressure in the second chamber 282 may be lowered relative to the fluid pressure in the first chamber 280 by the hand pump 400. For example, a user may manipulate the hand pump 400 to lower the pressure in the second chamber 282 (e.g., relative to the fluid pressure in the first chamber 280).

The second valve member 320 is selectively repositionable between a second valve member first position and a second valve member second position. In the first position, the second valve member 320 engages the valve wall 260 such that the second valve member 320 forms a first seal that substantially prevents a fluid from flowing through the one or more second fluid passageways 266. In the second position second valve member 320 disengages the valve wall 260 such that the fluid is permitted to flow through the one or more second fluid passageways 266.

In another example embodiment, the second valve member 320 is positioned at least partially within the second valve opening 264 such that the valve head 324 is positioned towards the second port 122. When a fluid pressure (e.g., gas pressure, liquid pressure, etc.) in the second chamber 282 is greater than a fluid pressure in the second port 122, the second valve member 320 is forced away from the valve sealing surface 268 (e.g., towards the second port 122) by the fluid pressure in the second chamber 282, such that the second valve member 320 disengages the second valve sealing surface 268. When the second valve member 320 disengages the second valve sealing surface 268, a fluid flows from the higher pressure second chamber 282 to the lower pressure second port 122.

In some embodiments, the fluid pressure in the second chamber 282 may be raised relative to the fluid pressure in the second port 122 by the hand pump 400. For example, a user may manipulate the hand pump 400 to raise the pressure in the second chamber 282 (e.g., relative to the fluid pressure in the second port 122).

It should be noted that the term "example" as used herein to describe various embodiments is intended to indicate that such embodiments are possible examples, representations, and/or illustrations of possible embodiments (and such term is not intended to connote that such embodiments are necessarily extraordinary or superlative examples).

As utilized herein, the term "substantially" and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges, relationships, or descriptions provided. Accordingly, these terms should be interpreted as indicating that insubstantial or inconsequential modifications or alterations of the subject matter described and claimed are considered to be within the scope of the disclosure as recited in the appended claims. The term "coupled" and the like as used herein mean the joining of two members directly to one another. Such joining may be stationary (e.g., permanent) or moveable (e.g., removable or releasable).

References herein to the positions of elements (e.g., "top," "bottom," "above," "below," etc.) are merely used to describe the orientation of various elements in the FIGURES. It should be noted that the orientation of various elements may differ according to other exemplary embodiments, and that such variations are intended to be encompassed by the present disclosure.

It is important to note that the construction and arrangement of the various example embodiments are illustrative only. Although only a few embodiments have been described in detail in this disclosure, those skilled in the art who review this disclosure will readily appreciate that many modifications are possible (e.g., variations in sizes, dimensions, structures, shapes and proportions of the various elements, various parameters, mounting arrangements, use of materials, colors, orientations, etc.) without materially departing from the novel teachings and advantages of the subject matter described herein. For example, elements shown as integrally formed may be constructed of multiple parts or elements, the position of elements may be reversed or otherwise varied, and the nature or number of discrete elements or positions may be altered or varied. The order or sequence of any process or method steps may be varied or resequenced according to alternative embodiments. Other substitutions, modifications, changes and omissions may also be made in the design, operating conditions and arrangement of the various example embodiments without departing from the scope of the concepts presented herein.

While this specification contains many specific implementation details, these should not be construed as limitations on the scope of any inventions or of what may be claimed, but rather as descriptions of features specific to particular implementations of particular inventions. Certain features described in this specification in the context of separate implementations can also be implemented in combination in a single implementation. Conversely, various features described in the context of a single implementation can also be implemented in multiple implementations separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

## Claims

1. A valve assembly comprising:
a valve body comprising:
a first central wall defining a first valve opening, one or more first fluid passageways, and a valve central opening, and
a valve wall defining a second valve opening and one or more second fluid passageways, the valve wall spaced away from the first central wall by the valve central opening, wherein the valve body defines a first chamber and a second chamber, the first chamber separated from the second chamber by at least the first central wall;
a first valve member disposed at the first valve opening, the first valve member selectively repositionable between a first valve member first position, where the first valve member engages the first central wall such that the first valve member forms a first seal that substantially prevents a fluid from flowing through the one or more first fluid passageways, and a first valve member second position, where the first valve member disengages the first central wall such that the fluid is permitted to flow through the one or more first fluid passageways; and
a second valve member disposed at the second valve opening.

2. The valve assembly of claim 1, wherein the one or more first fluid passageways are spaced away from the valve central opening.

3. The valve assembly of claim 1, wherein the one or more first fluid passageways are disposed proximate the first valve opening.

4. The valve assembly of any preceding claim, wherein the first valve member comprises a valve head, the first valve member positioned at least partially within the first valve opening such that, when a second fluid pressure in the second chamber is less than a first fluid pressure in the first chamber, the first valve member is forced away from the first central wall, such that the first valve member disengages the first central wall; and/or
wherein the second valve member is selectively repositionable between a second valve member first position, where the second valve member engages the valve wall such that the second valve member forms a second seal that substantially prevents a fluid from flowing through the one or more second fluid passageways, and a second valve member second position, where the second valve member disengages the valve wall such that the fluid is permitted to flow through the one or more second fluid passageways.

5. The valve assembly of any preceding claim, wherein the valve assembly defines a valve axis and the valve assembly further comprises:
a first side wall extending circumferentially around the valve axis, the first central wall extending inward from the first side wall;
a first end wall extends radially outward from the first side wall away from the valve axis, a first portion of the first side wall extending away from the first end wall in a first axial direction, and a second portion of the first side wall extending away from the first end wall in a second axial direction, opposite the first axial direction;
a second side wall extending away from the first central wall;
a second central wall extending away from the first central wall at the valve central opening; and
second end wall extending away from the second side wall away from the valve axis.

6. The valve assembly of claim 5, wherein the first central wall, the second central wall, the second side wall, and the second end wall cooperate to define the first chamber; or
wherein the first side wall, the first central wall, the second central wall, the second end wall, and the valve wall cooperate to define the second chamber.

7. The valve assembly of any one of any preceding claim, wherein the second chamber is in fluid receiving communication with the first chamber via the one or more first fluid passageways.

8. A filtration system comprising:
a filter head defining an outlet port and a central port, the central port extending through the outlet port;
a filter cartridge removably coupled to the filter head;
a hand pump coupled to the filter head; and
a valve assembly disposed in the central port, the valve assembly comprising:
a valve body comprising:
a first central wall defining first valve opening, one or more first fluid passageways, and a valve central opening, and
a valve wall defining a second valve opening and one or more second fluid passageways, the valve wall spaced away from the first central wall by the valve central opening, wherein the valve body defines a first chamber and a second chamber, the first chamber separated from the second chamber by at least the first central wall, and the second chamber in fluid communication with the outlet port;
a first valve member disposed at the first valve opening, the first valve member selectively repositionable between a first valve member first position, where the first valve member engages the first central wall such that the first valve member forms a first seal that substantially prevents a fluid from flowing through the one or more first fluid passageways, and a first valve member second position, where the first valve member disengages the first central wall such that the fluid is permitted to flow through the one or more first fluid passageways; and
a second valve member disposed at the second valve opening.

9. The filtration system of claim 8, wherein the first chamber is in fluid communication with the filter cartridge and the second chamber is in fluid communication with the hand pump; wherein optionally
the hand pump is configured to:
selectively decrease a second fluid pressure in the second chamber relative to a first fluid pressure in the first chamber; and
selectively increase the second fluid pressure in the second chamber relative to a third fluid pressure in the outlet port.

10. The filtration system of claim 9, wherein the first valve member is configured to move from the first valve member first position to the first valve member second position when the second fluid pressure in the second chamber is less than the first fluid pressure in the first chamber; or
wherein the second valve member is selectively repositionable between a second valve member first position, where the second valve member engages the valve wall such that the second valve member forms a second seal that substantially prevents a fluid from flowing through the one or more second fluid passageways, and a second valve member second position, where the second valve member disengages the valve wall such that the fluid is permitted to flow through the one or more second fluid passageways; and
the second valve member is configured to move from the second valve member first position to the second valve member second position when the second fluid pressure in the second chamber is greater than the third fluid pressure in the outlet port.

11. The filtration system of any one of claims 8-10, wherein the valve assembly defines a valve axis and the valve assembly further comprises:
a first side wall extending circumferentially around the valve axis, the first central wall extending inward from the first side wall;
a first end wall extends radially outward from the first side wall away from the valve axis, a first portion of the first side wall extending away from the first end wall in a first axial direction, and a second portion of the first side wall extending away from the first end wall in a second axial direction, opposite the first axial direction;
a second side wall extending away from the first central wall;
a second central wall extending away from the first central wall at the valve central opening; and
second end wall extending away from the second side wall away from the valve axis.

12. The filtration system of claim 11, further comprising:
a first channel wall extending away from the first end wall, substantially parallel to and spaced away from the first side wall, wherein the first side wall, the first end wall, and the first channel wall cooperate to define a first channel; and
a first sealing member, the first channel is sized to receive the first sealing member, the first sealing member configured to contact and engage the hand pump, such that the first sealing member forms a seal between the valve assembly and the hand pump.

13. The filtration system of claim 12, further comprising:
a second channel first wall extending away from the second end wall, towards the filter cartridge;
a second channel second wall extending away from the second channel first wall and away from the valve axis, the second channel second wall spaced away from the second end wall, wherein the second end wall, the second channel first wall, and the second channel second wall cooperate to define a second channel; and
a second sealing member, the second channel sized to receive the second sealing member, the second sealing member configured to contact and engage the filter head, such that the second sealing member forms a seal between the valve assembly and the filter head.

14. A filter head for a filtration system, the filter head comprising:
a filter head body defining an outlet port and a central port, the central port extending through the outlet port;
a valve assembly disposed in the central port, the valve assembly comprising:
a valve body comprising:
a first central wall defining first valve opening, one or more first fluid passageways, a valve central opening, and
a valve wall defining a second valve opening and one or more second fluid passageways, the valve wall spaced away from the first central wall by the valve central opening, wherein the valve body defines a first chamber and a second chamber, the first chamber separated from the second chamber by at least the first central wall, and the second chamber in fluid communication with the outlet port;
a first valve member disposed at the first valve opening, the first valve member selectively repositionable between a first valve member first position, where the first valve member engages the first central wall such that the first valve member forms a first seal that substantially prevents a fluid from flowing through the one or more first fluid passageways, and a first valve member second position, where the first valve member disengages the first central wall such that the fluid is permitted to flow through the one or more first fluid passageways; and
a second valve member disposed at the second valve opening.

15. The filter head of claim 14, further comprising a hand pump, wherein the hand pump and the valve assembly are removably coupled to the filter head body; and/or
wherein the valve assembly defines a valve axis and the valve assembly further comprises:
a first side wall extending circumferentially around the valve axis, the first central wall extending inward from the first side wall;
a first end wall extends radially outward from the first side wall away from the valve axis, a first portion of the first side wall extending away from the first end wall in a first axial direction, and a second portion of the first side wall extending away from the first end wall in a second axial direction, opposite the first axial direction;
a second side wall extending away from the first central wall;
a second central wall extending away from the first central wall at the valve central opening; and
second end wall extending away from the second side wall away from the valve axis;
wherein the first central wall, the second central wall, the second side wall, and the second end wall cooperate to define the first chamber;
wherein the first side wall, the first central wall, the second central wall, the second end wall, and the valve wall cooperate to define the second chamber; and
wherein the second chamber is in fluid receiving communication with the first chamber via the one or more first fluid passageways.
